# EUROPÄISCHE PATENTSCHRIFT

(11) **EP 1 395 358 B1**
(45) Veröffentlichungstag und Bekanntmachung des Hinweises auf die Patenterteilung: **07.09.2005**
(21) Anmeldenummer: 02758211.3
(22) Anmeldetag: 01.06.2002
(51) Int. Cl.: B01J 2/16, B01J 8/38, B01J 8/44, B01J 8/24

(54) **VORRICHTUNG ZUM BEHANDELN VON PARTIKELFÖRMIGEM GUT**
DEVICE FOR TREATING A PARTICULATE MATERIAL
DISPOSITIF POUR TRAITER UNE MATIERE PARTICULAIRE

(30) Priorität: 12.06.2001 DE 10129166
(43) Veröffentlichungstag der Anmeldung: 10.03.2004
(73) Patentinhaber: Hüttlin, Herbert, 79539 Lörrach (DE)
(72) Erfinder: Hüttlin, Herbert, 79539 Lörrach (DE)
(74) Vertreter: Weller, Wolfgang
(86) Internationale Anmeldenummer: PCT/EP2002/006024
(87) Internationale Veröffentlichungsnummer: WO 2002/100527

(56) Entgegenhaltungen:
- EP-A- 1 025 899
- DD-B- 203 826
- DE-A- 3 107 357
- DE-A- 10 054 557
- US-A- 4 000 563

## Beschreibung

Die Erfindung betrifft eine Vorrichtung zum Behandeln von partikelförmigem Gut, mit einer Prozeßkammer zum Aufnehmen und zum Behandeln des Gutes, wobei ein Boden der Prozeßkammer aus einander überlappenden Leitplatten aufgebaut ist, zwischen denen Schlitze gebildet sind, über die Prozeßluft mit einer im wesentlichen horizontalen Bewegungskomponente in die Prozeßkammer einführbar ist, wobei die Schlitze derart angeordnet sind, daß zwei aufeinander zu gerichtete Strömungen entstehen, die längs einer Aufbruchzone aufeinandertreffen und in eine vertikal nach oben gerichtete Strömung umgelenkt werden.

Eine derartige Vorrichtung ist aus der DE 199 04 147 A1 bekannt.

Derartige Vorrichtungen dienen dazu, um ein partikelförmiges Gut zu trocknen, zu granulieren oder zu coaten.

Ein gasförmiges Medium, sogenannte Prozeßluft, wird über den Boden in die Prozeßkammer eingeführt und tritt dabei durch die zahlreichen Schlitze zwischen den sich überlappenden Leitplatten etwa horizontal gerichtet in die Prozeßkammer ein.

Bei der eingangs genannten Vorrichtung erstrecken sich die Schlitze des kreisförmigen Bodens längs Sekanten, und die Aufbruchzone ist längs eines Durchmessers angeordnet. Im Bereich der Aufbruchzone längs des Durchmessers erfährt das Gut durch die nach oben gerichtete Strömung eine Vertikalbewegung. Nach einer gewissen Wegstrecke teilt sich das Gut längs des Durchmessers, fällt seitlich in die etwa halbscheibenförmigen Bodenbereiche zurück und wird dann erneut Richtung mittigem Durchmesser zur Aufbruchzone bewegt.

Es ist ein Bestreben in dieser Technologie, eine möglichst effektive Behandlung des Gutes durchzuführen. Dahinter steht, daß das Gut in möglichst kurzer Zeit mit möglichst wenig Energieaufwand möglichst gleichmäßig behandelt werden soll. Für eine möglichst gleichmäßige Behandlung des Gutes sind beherrschbare und definierbare Geometrien der Gutbewegung notwendig.

Es ist daher Aufgabe der vorliegenden Erfindung, eine Vorrichtung der eingangs genannten Art dahingehend weiterzuentwickeln, daß das Gut effektiv und möglichst gleichmäßig behandelt werden kann.

Erfindungsgemäß wird die Aufgabe dadurch gelöst, daß die Leitplatten als Ringbleche ausgebildet sind, so daß kreisförmige Schlitze ausgebildet sind, und daß die Ringbleche so gelegt sind, daß eine radial äußere, von außen nach innen gerichtete erste Strömung und eine radial innere, von innen nach außen gerichtete zweite Strömung an durchtretender Prozeßluft ausgebildet wird, wobei die beiden oppositären Strömungen längs einer kreisförmigen Aufbruchzone aufeinandertreffen.

Durch diese Ausgestaltung bildet sich eine äußere ringförmige Schubfläche über dem Boden aus, über die das Gut von außen nach innen Richtung ringförmiger Aufbruchzone bewegt wird. Dabei wird der erwünschte Luftkisseneffekt aufrechterhalten, und das Gut wird schonend und gezielt Richtung Aufbruchzone bewegt.

Dieser äußeren ringförmigen Schubfläche wirkt eine innere kreisförmige Schubfläche entgegen. Dort wird das Gut ebenfalls auf einer Art Luftkissen von innen nach außen in Richtung der ringförmigen Aufbruchzone bewegt. Durch die Ausbildung der Aufbruchzone als Ring ist bei einem kreisförmigen Boden eines bestimmten Durchmessers eine wesentlich längere Aufbruchzone geschaffen als bei der Vorrichtung der eingangs genannten Art, bei der sich die Aufbruchzone lediglich längs eines Durchmessers erstreckt.

Ein weiterer bedeutsamer Vorteil besteht in der Art der Gutbewegung. Nach einer gewissen vertikalbewegung des Gutes, deren Höhe und Intensität von der zugeführten Luftmenge, deren statischem Druck sowie von Form, Dichte und Wichte des bewegten Gutes abhängig ist, teilt sich das Gut in einer Art Diffusion, wobei eine Hälfte des bewegten Gutvolumens nach außen und die andere Hälfte nach innen abfällt und schließlich zur kreisförmigen Aufbruchzone zurückfließt, um erneut nach oben bewegt zu werden. Es entsteht, auf einen Querschnitt einer solchen Vorrichtung gesehen, eine doppelte Flutung, deren Bewegung äußerst definiert gestaltbar ist.

Bei der horizontalen Bewegung der Gutteilchen zur ringförmigen Aufbruchzone hin kann bereits eine große Trocknungsleistung an das Gut abgegeben werden, bevor es auf die Aufbruchzone trifft. Derartiges Gut neigt ja immer zu Verklebungen; beim Trocknen deswegen, weil das Gut ausgänglich feucht ist, beim Granulieren oder Coaten durch die entsprechend auf das Gut aufgesprühte Granulier- bzw. Coatingflüssigkeit.

Radial außerhalb und radial innerhalb der kreisförmigen Aufbruchzone gesehen bilden sich also umlaufende Gutbewegungen aus, die geometrisch klar definiert und beherrschbar sind. Dadurch ist nicht nur eine effektive sondern auch eine äußerst gleichmäßige Behandlung des Gutes ermöglicht.

In einer weiteren Ausgestaltung der Erfindung erstreckt sich die kreisförmige Aufbruchzone längs des die Fläche des Bodens halbierenden Kreises.

Diese Maßnahme hat den Vorteil, daß die radial äußere Ringfläche genau gleich groß ist wie die radial innerhalb der kreisförmigen Aufbruchzone gelegene Kreisfläche. Die Gutmenge, die radial außerhalb der kreisförmigen Aufbruchzone bewegt wird, läuft somit über eine gleiche Fläche wie das radial innere bewegte Gut, d.h. beide Gutmengen werden über einen gleichflächigen Bereich mit Prozeßluft beaufschlagt und dadurch beschleunigt, so daß beidseits der kreisförmigen Aufbruchzone gleichmäßige Bedingungen herrschen, was zu einer Vereinheitlichung des Behandlungsergebnisses weiter beiträgt.

In einer weiteren Ausgestaltung der Erfindung sind zwischen den Ringblechen Leitelemente angeordnet, die der zwischen den Ringblechen durchströmenden Prozeßluft eine umfängliche Bewegungskomponente auferlegen.

Diese Maßnahme hat den Vorteil, daß der Prozeßluft beim Durchtreten zwischen den Ringblechen nicht nur die horizontal gerichtete Komponente auferlegt wird, sondern durch die entsprechende Ausrichtung der Leitelemente auch gleichzeitig eine gewisse umfänglich gerichtete Komponente auferlegt werden kann. Dadurch ist es dann möglich, die beidseits der Aufbruchzone umlaufenden Gutteilchen nicht nur in jeweiligen Radialebenen zu bewegen, sondern ihnen auch eine umfängliche Komponente aufzuerlegen, so daß sich beispielsweise der äußere Ring an bewegten Gutteilchen auch noch zusätzlich um die Mittellängsachse des Bodens dreht, was zu einer Effektivität der Behandlung beiträgt.

In einer weiteren Ausgestaltung der Erfindung fungieren die Leitelemente zugleich als Abstandhalter.

Diese Maßnahme hat den Vorteil, daß durch konstruktiv einfache Maßnahmen sowohl die übereinandergelegten Ringbleche auf Abstand gehalten werden als auch der Leiteffekt erzielt werden kann.

In einer weiteren Ausgestaltung der Erfindung sind im Bereich der Aufbruchzone Leitflächen angeordnet, die den Übergang von der horizontalen Strömung in die vertikale Strömung leiten.

Diese Maßnahme hat den Vorteil, daß bei gegen Aufprall empfindlichem Gut die Richtungsänderung von den oppositären horizontalen Richtungen in die vertikal nach oben ansteigende Richtung mechanisch sanft unterstützt wird.

In einer weiteren Ausgestaltung der Erfindung ist im Bereich des peripheren Umfanges des Bodens ebenfalls ein Schlitz angeordnet, über den Prozeßluft nach innen gerichtet in die Prozeßkammer einführbar ist.

Diese Maßnahme hat den erheblichen Vorteil, daß sich in diesem kritischen Randeckenbereich keine Anbackungen oder Verklebungen ausbilden können, sondern daß durch diesen peripheren Schlitz dieser kritische Bereich immer freigeblasen wird. Dies trägt ebenfalls zu einem gleichmäßigen Behandlungsergebnis bei.

Bei einer weiteren Ausgestaltung der Erfindung ist in der Aufbruchzone zumindest eine etwa vertikal nach oben sprühende Düse angeordnet.

Diese Maßnahme hat den Vorteil, daß in der Aufbruchzone den Gutteilchen gezielt ein Behandlungsmedium, beispielsweise eine Granulierflüssigkeit oder eine Coatingflüssigkeit, aufgesprüht werden kann.

Es können dabei unterschiedliche Ausgestaltungen an Düsen eingesetzt werden, und auch die Anordnung und die Anzahl der Düsen kann entsprechend der geometrischen Verhältnisse gewählt werden.

In einer vorteilhaften Ausgestaltung ist die Düse als Schlitzdüse ausgebildet, deren Schlitzöffnungen sich längs der Aufbruchzone erstrecken.

Diese Maßnahme hat den Vorteil, daß exakt im Bereich der Aufbruchzone, also der Zone, in der die oppositären Strömungen aufeinandertreffen und vertikal nach oben abgelenkt werden, die Düsenmündungen angeordnet sind.

Dabei kann die Schlitzdüse so ausgestaltet sein, daß sie über den gesamten Umfang der Aufbruchzone sprüht.

In einer weiteren Ausgestaltung der Erfindung sind in der Aufbruchzone mehrere Schlitzdüsen verteilt angeordnet.

Diese Maßnahme hat den Vorteil, daß damit flexibel an unterschiedliche Gutarten angepaßt werden kann, da es ausreichend ist, an einigen Stellen umfänglich um die ringförmige Aufbruchzone verteilt dem Gut das Behandlungsmittel aufzusprühen, insbesondere dann, wenn, wie zuvor erwähnt, dem Gut ohnehin eine umfängliche Bewegungskomponente auferlegt wird.

In einer weiteren Ausgestaltung der Erfindung weist die Schlitzdüse zwei Mündungen in Form von Schlitzöffnungen auf.

Diese Maßnahme hat den Vorteil, daß einfach aufgebaute Düsen möglich sind. Es wurde nämlich festgestellt, daß es ausreichend ist, eine Mündungsöffnung für die Flüssigkeit und eine Mündungsöffnung für die Zerstäubungsluft vorzusehen, um einen feinen Sprühnebel zu erzielen. Da die Düse ja unmittelbar in der Aufbruchzone angeordnet ist, bewegen sich beidseits der Düse die aufeinandergeprallten oppositären Strömungen nach oben und bewegen dadurch die Gutteilchen in den Sprühnebel gezielt hinein.

Dadurch können auch früher für notwendig erachtete zusätzliche Begleitströmungen um die Düse herum entfallen, die dafür sorgen sollten, daß ein Verkleben unmittelbar im Bereich der Düsenmündungen ausgeschlossen wird. Dies kann nun deswegen nicht mehr auftreten, da die oppositär aufeinanderprallenden Strömungen sich längs der Außenseite der Düse, die ja gerade in der Aufbruchzone angeordnet ist, nach oben bewegen und die aus der Düse austretenden Bestandteile von der Düsenmündung wegführen.

Diese Maßnahme hat also den erheblichen Vorteil, daß mit einer einfachen Düsenkonstruktion ein äußerst gutes Sprühverhalten erzielt werden kann, was ein gutes Behandlungsergebnis nach sich zieht.

In einer weiteren Ausgestaltung der Erfindung sind die Schlitzöffnungen der Schlitzdüsen aus mehreren, auf Abstand gehaltenen Blechen begrenzt.

Diese Maßnahme hat den Vorteil, daß die Schlitzdüse aus einfach ausgestalteten Bauelementen aufgebaut ist und demzufolge auch einfach zu reinigen ist.

In einer weiteren Ausgestaltung der Erfindung sind die Bleche über Abstandhalter auf Abstand gehalten, und sie werden durch eine Halterung aneinandergehalten.

Diese Maßnahme hat den Vorteil, daß der zuvor erwähnte Vorteil des einfachen Aufbaus weiter verbessert ist, und daß durch Lösen der Halterung die Bleche voneinander abgenommen und zu Reinigungszwecken zerlegt werden können. Beim Zusammenbau können dann, wenn andere Sprühmedien gewünscht sind, auch andere Abstandshalter eingesetzt werden, so daß dann die Mündungsöffnungsbreite variiert werden kann.

In einer weiteren Ausgestaltung der Erfindung ist die Schlitzdüse als Modulbauteil ausgebildet, das von unten in den Boden der Prozeßkammer in die Aufbruchzone einführbar ist.

Diese Maßnahme hat den Vorteil, daß die Düsen einfach in die Vorrichtung eingesetzt und auch von dieser abgenommen werden können, gegebenenfalls sogar während eines Behandlungsprozesses, falls Störungen auftreten.

In einer weiteren Ausgestaltung der Erfindung sind die aneinanderliegenden Bleche der Schlitzdüse anströmseitig ausgewölbt, wodurch Anströmkanäle ausgebildet sind.

Diese Maßnahme hat den Vorteil, daß durch konstruktiv äußerst einfache Maßnahmen die Schlitzdüse samt den notwendigen Zuführkanälen ausgebildet ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand eines ausgewählten Ausführungsbeispiels im Zusammenhang mit den beiliegenden Zeichnungen näher beschrieben und erläutert. Es zeigen:
- Fig. 1: eine perspektivische Darstellung einer erfindungsgemäßen Vorrichtung in einem Schnitt längs eines Durchmessers der kreisförmigen Vorrichtung;
- Fig. 2: eine Seitenansicht des Schnittes von Fig. 1, wobei durch Strömungspfeile die Strömungsverhältnisse der Prozeßluft und die Bewegungsverhältnisse des bewegten Gutes dargestellt sind;
- Fig. 3: einen Schnitt längs der Linie III-III in Fig. 1, wobei eine Draufsicht auf den Boden resultiert;
- Fig. 4: eine stark vergrößerte Darstellung des in Fig. 1 mit einer Linie umrandeten Bereiches;
- Fig. 5: eine weitere stark vergrößerte Ansicht des in Fig. 4 im Bereich einer Düsenmündung umrandeten Bereiches;
- Fig. 6: eine perspektivische Darstellung einer kreisabschnittförmigen Schlitzdüse als Modulbauteil;
- Fig. 7: eine der Schnittdarstellung von Fig. 4 entsprechende Darstellung im Bereich eines Leitelementes und
- Fig. 8: eine stark vergrößerte Darstellung des in Fig. 7 umrandeten Bereiches.

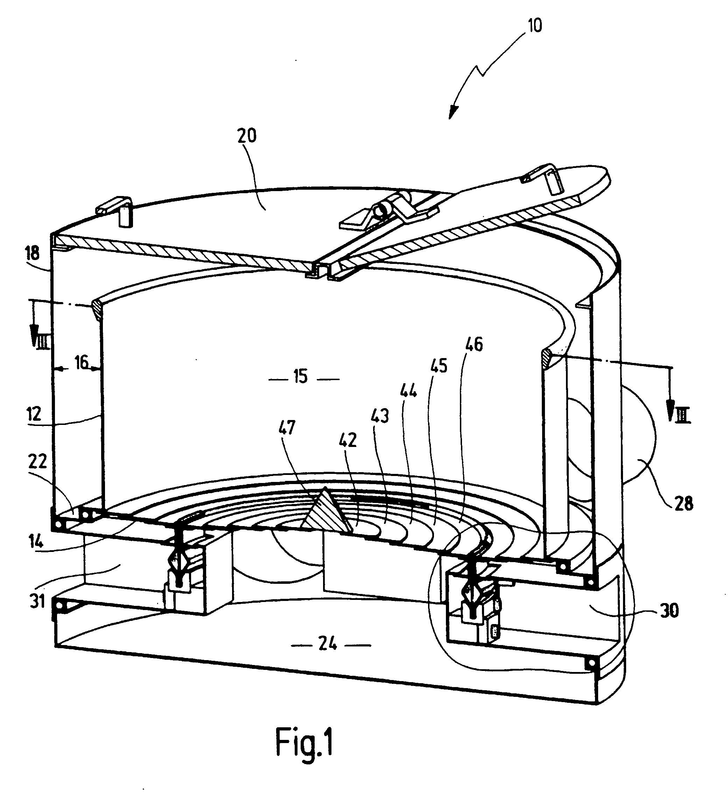

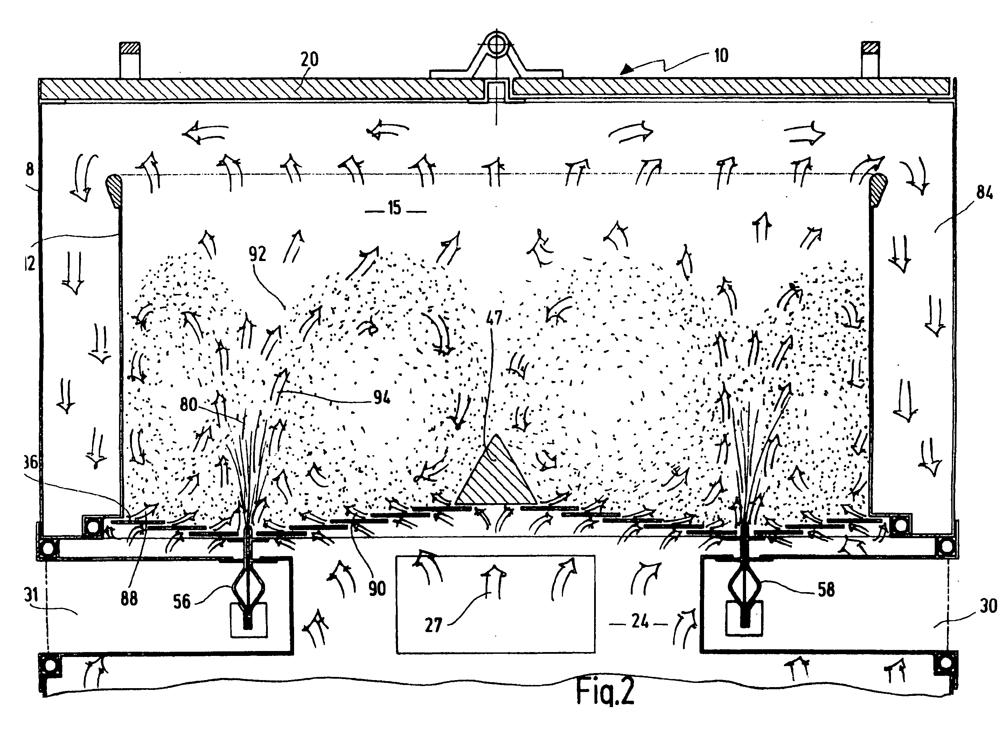

Eine in den Figuren, und insbesondere in den Figuren 1 und 2, dargestellte Vorrichtung ist in ihrer Gesamtheit mit der Bezugsziffer 10 bezeichnet.

Die Vorrichtung 10 weist einen stehenden zylindrischen Behälter 12 auf, der mit einem Boden 14 versehen ist. Der Innenraum des Behälters 12 stellt eine Prozeßkammer 15 dar.

Der Behälter 12 ist in einem Abstand und konzentrisch von einer Außenwand 18 umgeben.

Die Höhe der Außenwand 18 ist etwas größer als die Höhe des Behälters 12, und die Außenwand 18 ist über einen Deckel 20 verschlossen. Zwischen Behälter 12 und Außenwand 18 erstreckt sich bodenseitig ein abgestufter Ringflansch 22.

Unter dem Boden 12 ist eine Anströmkammer 24 angeordnet, über deren Einlaß 26 Prozeßluft 27 eingeführt wird.

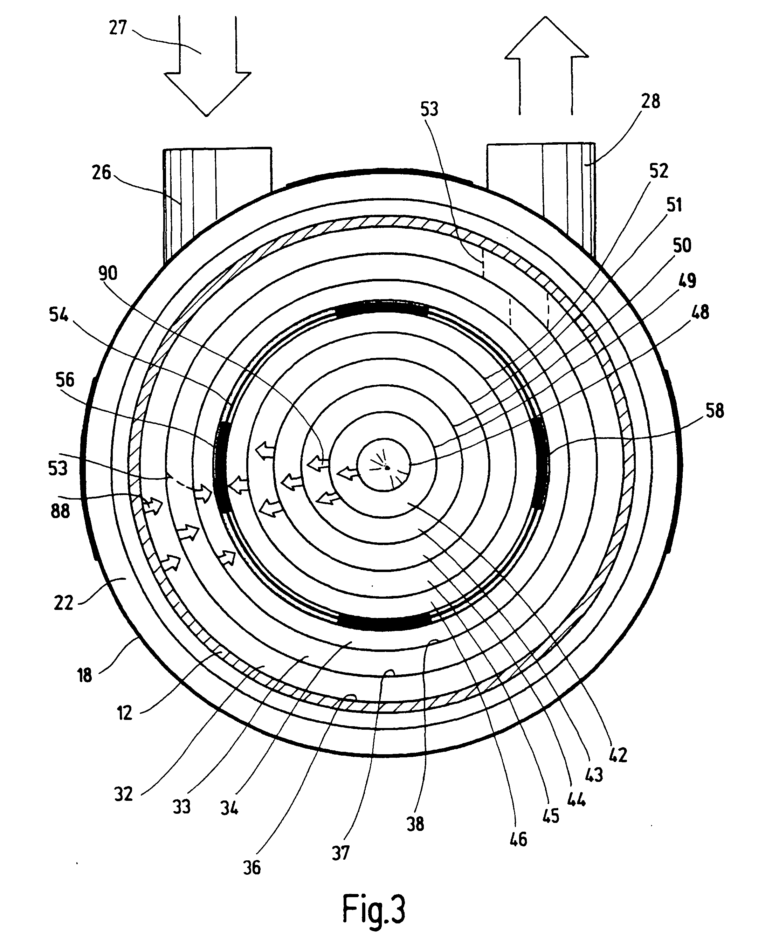

Wie nachfolgend noch näher beschrieben wird, strömt die Prozeßluft 27 aus der Anströmkammer 24 durch den Boden 14 in den Innenraum des Behälters 12, also in die Prozeßkammer 15 hinein. Die Prozeßluft 27 verläßt den Behälter 12 am oberen Ende und tritt in die seitliche Ringkammer zwischen Behälter 12 und Außenwand 18 ein, strömt nach unten und strömt über einen Auslaß 28 wieder aus der Vorrichtung ab (siehe insbesondere Fig. 1 und Fig. 3).

In der Anströmkammer 24 sind vier Kavitäten ausgespart, wobei aus der Schnittdarstellung von Fig. 1 und 2 zwei diametral gegenüberliegende Kavitäten 30 ersichtlich sind. Die Kavitäten sind als zur Außenseite hin offene Ausbuchtungen in einer Seitenwand der Anströmkammer 24 ausgebildet, d.h. diese sind von der Außenseite her zugänglich, und sie dienen dazu, noch näher zu beschreibende Düsen 56 aufzunehmen.

Zunächst einmal soll die genauere Zusammensetzung des Bodens 14 anhand der Figuren näher beschrieben werden. Wie insbesondere aus den Figuren 1, 3 und 4 ersichtlich, setzt sich der Boden aus einem ersten Satz an äußeren Ringblechen 32, 33 und 34 zusammen.

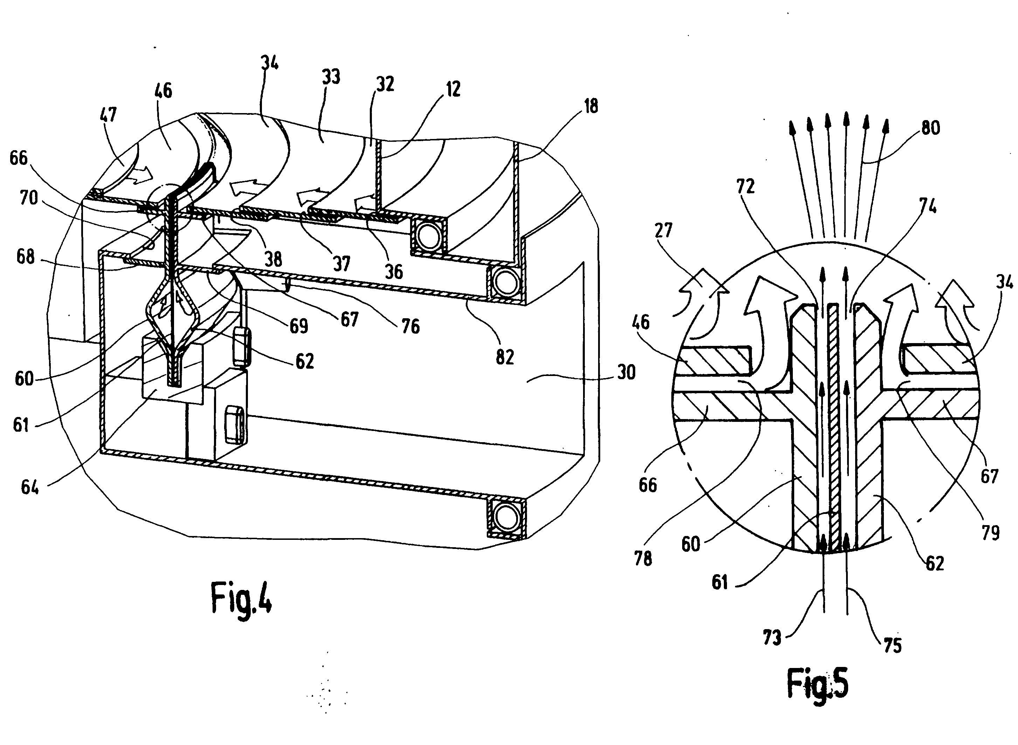

Wie insbesondere aus der Detaildarstellung von Fig. 4 ersichtlich, ist das äußere Ringblech 32 das mit dem größten Durchmesser, und es erstreckt sich im Abstand bis unter die stehende Wand des Behälters 12. Dadurch ist ein umfänglicher Schlitz 36 ausgebildet, siehe insbesondere Fig. 3, über den Prozeßluft 27 aus der Anströmkammer 24 in die Prozeßkammer 15 eintreten kann.

Unter dem Ringblech 32 ist ein durchmessergeringeres Ringblech 33 angeordnet, und zwar derart, daß das obere Ringblech 32 dieses darunterliegende Ringblech 33 etwas überlappt, wie das insbesondere aus Fig. 4 ersichtlich ist. Dadurch ist ein weiterer ringförmiger Schlitz 37 geschaffen, durch den Prozeßluft 27 in einer radial von außen nach innen gerichteten ersten Strömung 88 eintreten kann.

Unter dem Ringblech 33 liegt dann ein weiteres, noch durchmessergeringeres Ringblech 34, wobei das Ringblech 33 das darunterliegende Ringblech 34 etwas überlappt, so daß dann dadurch ein weiterer ringförmiger Schlitz 38 geschaffen ist.

Ein zweiter Satz an fünf Ringblechen 42 bis 46 bildet einen inneren scheibenförmigen Abschnitt des Bodens 14, wie das insbesondere aus der Draufsicht von Fig. 3 ersichtlich ist. Die Anordnung, Lage und Überlappung dieser inneren fünf Ringbleche 42 bis 46 ist insbesondere aus den Figuren 1, 2 und 7 ersichtlich.

Daraus ist zu erkennen, daß ein mittiges zentrales durchmessergeringstes Ringblech 42 vorhanden ist, dessen mittige Ringöffnung durch einen Kegel 47 abgedeckt ist. Unter das erste Ringblech 42 ist ein etwas durchmessergrößeres Ringblech 43 gelegt, wobei das Ringblech 42 das Ringblech 43 etwas überlappt. Dadurch ist ein ringförmiger Schlitz 48 zwischen dem Ringblech 42 und dem Ringblech 43 geschaffen (siehe insbesondere Fig. 3), durch den Prozeßluft 27 in einer von innen nach außen gerichteten Strömung 90 austreten kann. Unter dem Ringblech 43 liegt dann entsprechend ein durchmessergrößeres Ringblech 44, wodurch ein weiterer Schlitz 49 geschaffen ist. Dies setzt sich dann entsprechend mit den Ringblechen 44, 45 und 46 fort, wodurch weitere Schlitze 50, 51 und 52 ausgebildet sind.

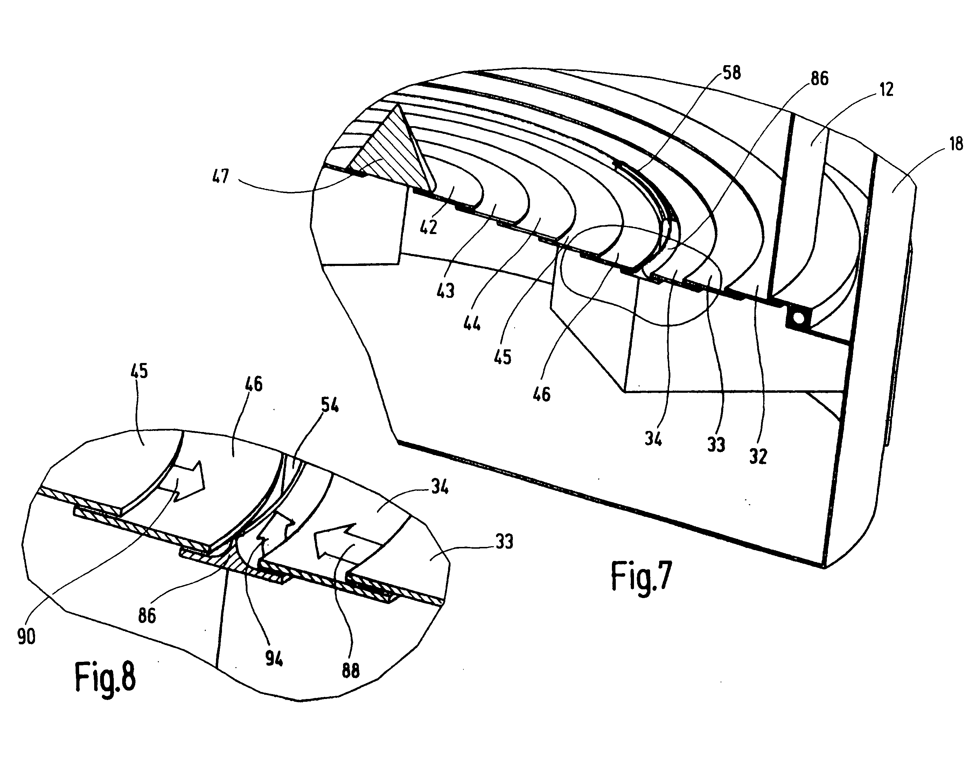

Insbesondere aus den Detaildarstellungen von Figuren 7 und 8 ist zu erkennen, daß das radial innerste Ringblech 34 des äußeren Satzes an Ringblechen auf gleicher Höhe und im Abstand vom äußersten Ringblech 46 des inneren Satzes an Ringblechen zum Liegen kommt.

Wie insbesondere aus der stark vergrößerten Darstellung von Fig. 8 ersichtlich ist, prallen in diesem Bereich die von den äußeren Ringblechen 32 bis 34 erzeugte, etwa horizontal verlaufende, von außen nach innen gerichtete erste Strömung 88 und die von den inneren Ringblechen 42, 43, 44, 45 und 46 radial von innen nach außen gerichtete zweite, etwa horizontal verlaufende Strömung 90 aufeinander, und diese werden dann in eine vertikal nach oben gerichtete Strömung 94 umgelenkt.

Der Bereich, in dem diese oppositären Strömungen 88 und 90 aufeinandertreffen, ist eine sogenannte Aufbruchzone 54. In der Darstellung von Figuren 7 und 8 ist ersichtlich, daß im Bereich dieser Aufbruchzone 54 Leitflächen 86 angeordnet sein können, die den Übergang von den oppositären, etwa horizontal gerichteten Strömungen 88 und 90 in die vertikal nach oben gerichtete Strömung 94 leiten.

Insbesondere aus den Darstellungen der Figuren 1, 2, 4 und 5 ist ersichtlich, daß im Bereich der Aufbruchzone 54 auch Düsen 56 angeordnet sein können.

Im dargestellten Ausführungsbeispiel sind vier umfänglich gleichmäßig verteilte Düsen angeordnet, die allesamt als Schlitzdüsen 58 ausgebildet sind.

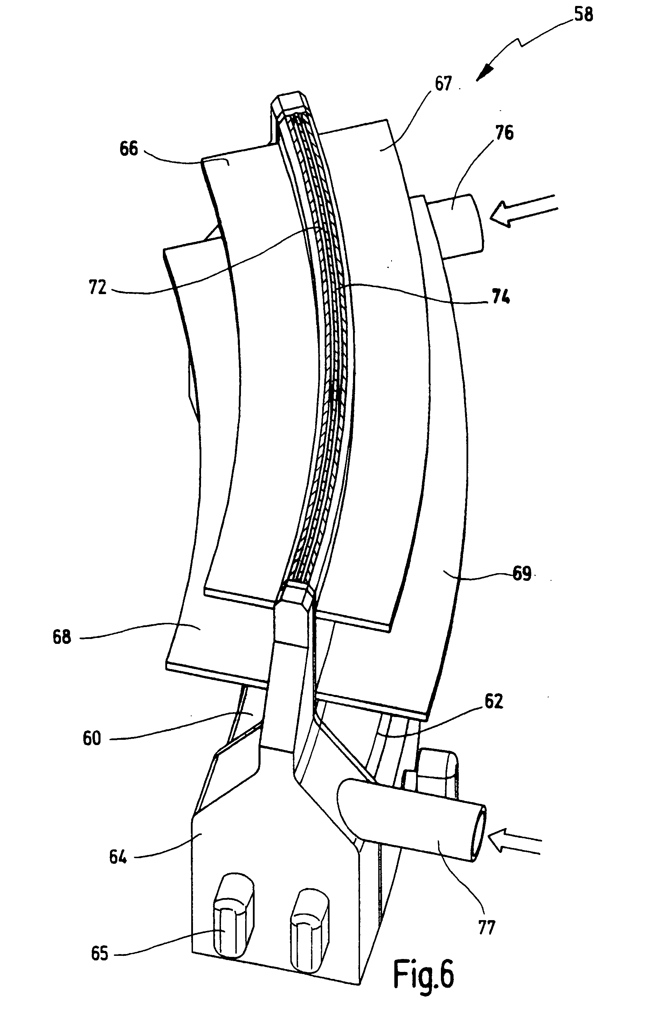

Nachfolgend soll zunächst der nähere Aufbau einer solchen Schlitzdüse 58 beschrieben werden, die als ein Modulbauteil aufgebaut ist, wie es aus Fig. 6 ersichtlich ist. Dieses Modulbauteil kann über die seitlichen Kavitäten 30 bzw. 31 eingebaut bzw. eingesetzt werden, und zwar derart, daß die entsprechenden Schlitzöffnungen der Schlitzdüse 58 längs der Aufbruchzone 54 verlaufen.

Die Schlitzdüse 58 ist aus einem Satz an aneinandergefügten Blechen 60, 61, 62 aufgebaut, die durch hier nicht näher gezeigte Abstandshalter auf Abstand gehalten werden und über eine Halterung 64 miteinander verbunden sind, wobei diese über Knebelschrauben 65 zusammengehalten werden. Die beiden äußeren Bleche 60 und 62 weisen im Abstand zur Mündungsöffnung der Düse zwei seitliche Flügel 66 und 67 auf, deren seitliche Forterstreckung so ausgebildet ist, daß diese, wenn die Düse wie in Fig. 4 dargestellt eingebaut ist, von den Ringblechen 34 bzw. 46 überlappt werden. Dadurch sind weitere Schlitze 78 und 79 gebildet, über die Prozeßluft 27 in die Prozeßkammer 15 eintreten kann, und zwar derart, wie das insbesondere aus Fig. 5 ersichtlich ist, daß diese entsprechend dem oppositären Strömungsprinzip im Bereich der Aufbruchzone 54 aufeinandertreffen und nach oben in die einzige vertikale Strömung umgelenkt werden.

Im Abstand und etwa parallel zu den seitlichen Flügeln 66 und 67 erstreckt sich beidseits noch ein Abschlußblech 68 und 69, das dazu dient, eine Öffnung 70 in einer Wand 82 der Kavität 30 zu verschließen, wenn die als Modulbauteil ausgebildete Schlitzdüse 58 eingebaut ist.

Insbesondere aus den Darstellungen von Figuren 1 und 5 ist ersichtlich, daß in der Schlitzdüse 58 zwei Schlitzöffnungen 72 und 74 gebildet sind. Durch eine Schlitzöffnung kann eine Flüssigkeit 73 geführt werden, durch die andere Schlitzöffnung Zerstäubungsluft 75, wozu entsprechende Stutzen 76 und 77 (siehe Fig. 6) vorgesehen sind.

Dadurch entsteht dann ein feiner Sprühnebel 80 (siehe Fig. 5) an versprühtem Behandlungsmedium, das durch die Schlitzdüse 58 austritt und, wie das nachstehend im Zusammenhang mit Fig. 2 noch näher beschrieben wird, auf das in der Prozeßkammer 15 verwirbelte Gut 92 aufgebracht wird.

In Fig. 6 ist die Schlitzdüse 58 so ausgebildet, daß deren Kontur der Krümmung der kreisförmigen Aufbruchzone 54 angepaßt ist.

Bei sehr großen Vorrichtungen 10, die also mehrere Meter Durchmesser haben können, kann die Schlitzdüse 58 aus fertigungstechnischen Gründen auch linear ausgebildet sein und in die entsprechende Öffnung zwischen dem innersten Ringblech 34 des äußeren Satzes und dem äußeren Ringblech 46 des inneren Satzes an Ringblechen angeordnet werden. Aus Fig. 4 ist ersichtlich, daß die äußeren Bleche 60 und 62 ausgebaucht sind, wohingegen das dazwischenliegende mittige Blech 61 durchgehend geradlinig ist, so daß dann entsprechende Zuführkanäle zum Zuführen der Flüssigkeit 73 bzw. der Sprühluft 75 geschaffen sind.

Wie insbesondere aus den Figuren 1 und 4 ersichtlich, kann die als Modulbauteil ausgebildete Schlitzdüse 58 einfach ein- bzw. ausgebaut werden, ohne den eigentlichen Betrieb im Inneren der Prozeßkammer 15 zu stören.

Diese können zum Auswechseln beispielsweise durch einen anderen Düsentyp ersetzt werden, oder um die Düse zu reinigen, einfach seitlich aus der Kavität 30 bzw. 31 herausgenommen werden.

Durch Lösen der Knebelschraube 65 kann die Halterung abgenommen werden, die Platten 60, 61, 62 voneinander abgenommen werden, und diese können dann gereinigt werden.

Der Aufbau dieser modulartigen Schlitzdüsen 58 trägt zusätzlich zu einem hervorragenden Behandlungsergebnis in der Vorrichtung 10 bei.

Die Strömungsverhältnisse in der erfindungsgemäßen Vorrichtung 10 im Betrieb sind aus Fig. 2 ersichtlich.

In der Prozeßkammer 15 ist ein teilchenförmiges Gut 92 aufgenommen, beispielsweise ein feines Pulver, das granuliert werden soll, ein Granulat, das beschichtet werden soll oder Pellets, die gecoated werden sollen.

Dadurch, daß sich die Sätze an Ringblechen 32 bis 34 und 42 bis 46 etwa horizontal erstrecken und einander überlappen, besteht keine Gefahr, daß auch feinteiliges Gut 92 nach dem Einfüllen durch den Boden 14 hindurchfällt.

Die über die Anströmkammer 24 zugeführte Prozeßluft 27 strömt durch den äußeren Satz an Ringblechen 32, 33 und 34 so ein, daß dadurch eine erste, etwa horizontale, von außen nach innen gerichtete Strömung 88 entsteht. Dabei sorgt insbesondere der äußere umfängliche Schlitz 36 dafür, daß in diesem kritischen Endbereich keine Anbackungen und Verklebungen resultieren.

Der innere Satz an Ringblechen 42 bis 46 sorgt für eine ebenfalls etwa horizontale, von innen nach außen gerichtete zweite Strömung 90.

Insbesondere aus der Draufsicht von Fig. 3 ist ersichtlich, daß der Durchmesser der Aufbruchzone 54 so gewählt ist, daß sich dieser längs des die Fläche des Bodens 14 halbierenden Kreises erstreckt. Der Durchmesser dieses flächenhalbierenden Kreises liegt bei einem Verhältnis von Außendurchmesser zu innerem Flächendurchmesser von ca. 1,41.

Anders ausgedrückt, wird das Gut 92 beidseits der ringförmigen Aufbruchzone 54 über eine gleiche Fläche bewegt, so daß entsprechend gleichmäßige Verhältnisse vorliegen.

Durch Vorsehen von entsprechend gekrümmt ausgebildeten Abstandhaltern zwischen den Ringblechen, wie in Fig. 3 durch die Bezugsziffer 53 angedeutet ist, können diese gleichzeitig die Funktion eines Leitelements 53 einnehmen, d.h. der Prozeßluft 27 kann noch eine umfängliche Komponente auferlegt werden.

Zurückkehrend zu der Darstellung von Fig. 2 ist nun ersichtlich, daß die beiden oppositären Strömungen 88 und 90 im Bereich der Aufbruchzone 54 aufeinandertreffen und in eine nach oben gerichtete vertikale Strömung 94 umgelenkt werden. In diesem Bereich werden die Gutteilchen von dem Sprühkegel 80 der Schlitzdüse 58 mit einem entsprechenden Medium beaufschlagt, beispielsweise einer Granulierflüssigkeit oder einer Coatingflüssigkeit.

Der nach oben gerichtete vertikale Strom der Gutteilchen 92 teilt sich nach einer gewissen Zeit in einen innerhalb der Aufbruchzone 54 abfallenden Strom und einen außerhalb der Aufbruchzone 54 nach außen abfallenden Strom. Die nach außen gerichteten Gutteilchen 92 werden über die Wand des Behälters 12 nach unten abgelenkt, treffen dann wieder auf den entsprechenden Bereich des Bodens 14 und werden durch die Prozeßluft 27 wieder beschleunigt und auf einer Art Luftkissen zur Aufbruchzone 54 hin bewegt.

Die nach innen abgelenkten Gutteilchen haben eine größere Wegstrecke zur Verfügung, fallen dann durch die Schwerkraft ab und werden durch den mittigen Kegel 47 wieder seitlich nach außen abgelenkt.

Dort werden diese dann wieder von der durch den inneren Satz an Ringblechen 42 bis 46 durchtretenden Prozeßluft 27 beschleunigt und auf einer Art Luftkissen zur Aufbruchzone 54 wieder rückgeführt.

Insgesamt gesehen entsteht somit in der Prozeßkammer 15 ein äußerer Ringwulst an umlaufenden Gutteilchen 92 und ein innerer Ringwulst an umlaufenden Gutteilchen 92, wie das durch die Strömungspfeile in Fig. 2 dargestellt ist.

Die Prozeßluft 27, die das Wirbelbett an verwirbeltem Gut 92 verlassen hat, strömt in Richtung Deckel 20, wird in den Ringraum zwischen Behälter 12 und Außenwand 18 umgelenkt, nach unten geleitet und über den Auslaß 58 vom Behälter 12 wieder abgeführt, entsprechend aufgearbeitet und dann wieder dem Behälter 12 über den Einlaß 26 zugeführt.

## Patentansprüche

1. Vorrichtung zum Behandeln von partikelförmigem Gut (92), mit einer Prozeßkammer (15) zum Aufnehmen und zum Behandeln des Gutes (92), wobei ein Boden (14) der Prozeßkammer (15) aus einander überlappenden Leitplatten aufgebaut ist, zwischen denen Schlitze gebildet sind, über die Prozeßluft (27) mit einer im wesentlichen horizontalen Bewegungskomponente in die Prozeßkammer (15) einführbar ist, wobei die Schlitze derart angeordnet sind, daß zwei aufeinander zu gerichtete Strömungen (88, 90) entstehen, die längs einer Aufbruchzone (54) aufeinandertreffen und in eine vertikal nach oben gerichtete Strömung (94) umgelenkt werden, **dadurch gekennzeichnet, daß** die Leitplatten als Ringbleche (32-34; 42-46) ausgebildet sind, so daß kreisförmige Schlitze (36-38; 48-52) ausgebildet sind, und daß die Ringbleche (32-34; 42-46) so gelegt sind, daß eine radial äußere, von außen nach innen gerichtete erste Strömung (88) und eine radial innere, von innen nach außen gerichtete zweite Strömung (90) an durchtretender Prozeßluft (27) ausgebildet werden, wobei die beiden oppositären Strömungen (88, 90) längs einer kreisförmigen Aufbruchzone (54) aufeinandertreffen.

2. Vorrichtung nach Anspruch 1, **dadurch gekennzeichnet, daß** die kreisförmige Aufbruchzone (54) sich längs des die Fläche des Bodens (14) halbierenden Kreises erstreckt.

3. Vorrichtung nach Anspruch 1 oder 2, **dadurch gekennzeichnet, daß** zwischen den Ringblechen (32-34; 42-46) Leitelemente (53) angeordnet sind, die der zwischen den Ringblechen (32-34; 42-46) durchströmenden Prozeßluft (27) eine umfängliche Bewegungskomponente auferlegen.

4. Vorrichtung nach Anspruch 3, **dadurch gekennzeichnet, daß** die Leitelemente (53) zugleich als Abstandhalter fungieren.

5. Vorrichtung nach einem der Ansprüche 1 bis 4, **dadurch gekennzeichnet, daß** im Bereich der Aufbruchzone (54) Leitflächen (86) angeordnet sind, die den Übergang von den horizontalen Strömungen (88, 90) in die vertikale Strömung (94) leiten.

6. Vorrichtung nach einem der Ansprüche 1 bis 5, **dadurch gekennzeichnet, daß** im Bereich des peripheren Umfangbereiches des Bodens (14) ebenfalls ein Schlitz (36) angeordnet ist, über den Prozeßluft (27) nach innen gerichtet in die Prozeßkammer (15) einführbar ist.

7. Vorrichtung nach einem der Ansprüche 1 bis 6, **dadurch gekennzeichnet, daß** in der Aufbruchzone (54) zumindest eine etwa vertikal nach oben sprühende Düse (56) angeordnet ist.

8. Vorrichtung nach Anspruch 7, **dadurch gekennzeichnet, daß** die Düse (56) als Schlitzdüse (58) ausgebildet ist, deren Schlitzöffnungen (72, 74) sich längs der Aufbruchzone (54) erstrecken.

9. Vorrichtung nach Anspruch 8, **dadurch gekennzeichnet, daß** in der Aufbruchzone (54) mehrere Schlitzdüsen (58) verteilt angeordnet sind.

10. Vorrichtung nach Anspruch 8 oder 9, **dadurch gekennzeichnet, daß** die Schlitzdüse (58) zwei Mündungen in Form von Schlitzöffnungen aufweist.

11. Vorrichtung nach Anspruch 10, **dadurch gekennzeichnet, daß** die Schlitzöffnungen (72, 74) der Schlitzdüse (58) durch mehrere, auf Abstand gehaltene Bleche (60, 61, 62) begrenzt werden.

12. Vorrichtung nach Anspruch 11, **dadurch gekennzeichnet, daß** die Bleche (60, 61, 62) über Abstandhalter auf Abstand gehalten werden und durch eine Halterung (64) aneinandergehalten sind.

13. Vorrichtung nach einem der Ansprüche 8 bis 12, **dadurch gekennzeichnet, daß** die Schlitzdüse (58) als Modulbauteil ausgebildet ist, das von unten in den Boden (14) der Prozeßkammer (15) in die Aufbruchzone (54) einführbar ist.

14. Vorrichtung nach einem der Ansprüche 11 bis 13, **dadurch gekennzeichnet, daß** die aneinanderliegenden Bleche (60, 61, 62) der Schlitzdüse (58) anströmseitig ausgewölbt sind und **dadurch** Anströmkanäle ausbilden.

## Claims

1. Device for treating particulate material (92), having a process chamber (15) for accommodating and for treating the material (92), a bottom (14) of the process chamber (15) being composed of baffle plates which overlap one another and between which slots are formed, via which slots process air (27) can be introduced with an essentially horizontal component movement into the process chamber (15), the slots being arranged in such a way that two flows (88, 90) directed towards one another are produced, these flows (88, 90) meeting one another along a breaking-up zone (54) and being deflected into a flow (94) directed vertically upwards, **characterized in that** the baffle plates are designed as annular plates (32-34; 42-46), so that circular slots (36-38; 48-52) are formed, and **in that** the annular plates (32-34; 42-46) are placed in such a way that a radially outer, first flow (88), directed from outside to inside, of process air (27) passing through and a radially inner, second flow (90), directed from inside to outside, of process air (27) passing through are formed, the two opposed flows (88, 90) meeting one another along a circular breaking-up zone (54).

2. Device of claim 1, **characterized in that** the circular breaking-up zone (54) extends along a circle halving the area of the bottom (14).

3. Device of claims 1 or 2, **characterized in that** guiding elements (53) are arranged between said annular plates (32-34; 42-46), and these guiding elements (53) impose a circumferential component movement on the process air (27) flowing through between the annular plates (32-34; 42-46).

4. Device of claim 3, **characterized in that** said guiding elements (53) at the same time function as spacers.

5. Device of anyone of claims 1 through 4, **characterized in that** guide surfaces (86) are arranged in the region of the breaking-up zone (54), these guide surfaces (86) directing the transition of the horizontal flows (88, 90) into the vertical flow (94).

6. Device of anyone of claims 1 through 5, **characterized in that** a slot (36) is likewise arranged in the region of the peripheral circumferential region of the bottom (14), via which slot (36) process air (27) can be introduced into the process chamber (15) in an inwardly directed manner.

7. Device of anyone of claims 1 through 6, **characterized in that** at least one nozzle (56) spraying vertically upwards is arranged in the breaking-up zone (54).

8. Device of claim 7, **characterized in that** the nozzle (56) is designed as a slotted nozzle (58), the slotted openings (72, 74) of which extend along the breaking-up zone (54).

9. Device of claim 8, **characterized in that** a plurality of slotted nozzles (58) are arranged in a distributed manner in the breaking-up zone (54).

10. Device of claims 8 or 9, **characterized in that** the slotted nozzle (58) has two orifices in the form of slotted openings.

11. Device of claim 10, **characterized in that** the slotted openings (72, 74) of the slotted nozzle (58) are defined by a plurality of plates (60, 61, 62) held at a distance apart.

12. Device of claim 11, **characterized in that** the plates (60, 61, 62) are held at a distance apart via spacers and are held on one another by a holding device (64).

13. Device of anyone of claims 8 through 12, **characterized in that** the slotted nozzle (58) is designed as a module component which can be inserted from below into the bottom (14) of the process chamber (15) into the breaking-up zone (54).

14. Device of anyone of claims 11 through 13, **characterized in that** the plates (60, 61, 62), bearing against one another, of the slotted nozzle (58) are arched on the inflow side and thereby form inflow passages.

## Revendications

1. Dispositif de traitement d'un produit (92) en forme de particules, comportant une chambre de processus (15) pour recevoir et traiter le produit (92), un fond (14) de la chambre de processus (15) étant construit à partir de plaques de guidage se chevauchant les unes les autres, entre lesquelles sont formées des fentes par lesquelles l'air de processus (27) peut être introduit dans la chambre de processus (15) avec une composante de mouvement sensiblement horizontale, les fentes étant disposées de manière qu'il se forme deux courants (88, 90) dirigés l'un vers l'autre, qui se rencontrent le long d'une zone d'ouverture (54) et sont déviés en un courant (94) dirigé verticalement vers le haut, **caractérisé en ce que** les plaques de guidage sont réalisées sous forme de tôles annulaires (32-34 ; 42-46) de manière que soient réalisées des fentes (36-38 ; 48-52) de forme circulaire, et **en ce que** les tôles annulaires (32-34 ; 42-46) sont placées de manière à réaliser à partir de l'air de processus (27) traversant, un premier courant (88) radialement extérieur, dirigé de l'extérieur vers l'intérieur et un deuxième courant (90) radialement intérieur, dirigé de l'intérieur vers l'extérieur, les deux courants (88, 90) opposés se rencontrant le long d'une zone d'ouverture (54) de forme circulaire.

2. Dispositif selon la revendication 1, **caractérisé en ce que** la zone d'ouverture (54) de forme annulaire s'étend le long du cercle partageant en deux la surface du fond (14).

3. Dispositif selon la revendication 1 ou 2, **caractérisé en ce qu'**entre les tôles annulaires (32-34 ; 42-46) sont disposés des éléments de guidage (53), qui imposent une composante de mouvement circulatoire à l'air de processus (27) circulant entre les tôles annulaires (32-34 ; 42-46).

4. Dispositif selon la revendication 3, **caractérisé en ce que** les éléments de guidage (53) servent en même temps d'écarteurs.

5. Dispositif selon l'une des revendications 1 à 4, **caractérisé en ce que**, dans la région de la zone d'ouverture (54), sont disposées des surfaces de guidage (86) qui guident le passage des courants horizontaux (88, 90) en un courant vertical (94).

6. Dispositif selon l'une des revendications 1 à 5, **caractérisé en ce que**, dans la région de la zone périphérique du pourtour du fond (14), est disposée également une fente (36) par laquelle l'air de processus (27), dirigé vers l'intérieur, peut être introduit dans la chambre de processus (15).

7. Dispositif selon l'une des revendications 1 à 6, **caractérisé en ce que** dans la zone d'ouverture (54) est disposée au moins une buse (56) de pulvérisation à peu près verticalement vers le haut.

8. Dispositif selon la revendication 7, **caractérisé en ce que** la buse (56) est réalisée comme buse en fente (58) dont les orifices de fente (72, 74) s'étendent le long de la zone d'ouverture (54).

9. Dispositif selon la revendication 8, **caractérisé en ce que** dans la zone d'ouverture (54) sont disposées réparties plusieurs buses en fente (58).

10. Dispositif selon la revendication 8 ou 9, **caractérisé en ce que** la buse en fente (58) présente deux embouchures sous la forme d'orifices de fente.

11. Dispositif selon la revendication 10, **caractérisé en ce que** les orifices de fente (72, 74) de la buse en fente (58) sont délimités par plusieurs tôles (60, 61, 62) maintenues à distance.

12. Dispositif selon la revendication 11, **caractérisé en ce que** les tôles (60, 61, 62) sont maintenues à distance par des écarteurs et sont fixées les unes aux autres par une fixation (64).

13. Dispositif selon l'une des revendications 8 à 12, **caractérisé en ce que** la buse en fente (58) est réalisée comme composant modulaire qui peut être introduit depuis le bas dans le fond (14) de la chambre de processus (15), dans la zone d'ouverture (54).

14. Dispositif selon l'une des revendications 11 à 13, **caractérisé en ce que** les tôles (60, 61, 62) s'appliquant les unes contre les autres de la buse en fente (58) sont bombées côté amont et forment de ce fait des canaux d'arrivée du courant.
